# EUROPÄISCHE PATENTANMELDUNG

(11) **EP 4 249 957 A1**
(43) Veröffentlichungstag der Anmeldung: **27.09.2023**
(21) Anmeldenummer: 23159625.5
(22) Anmeldetag: 02.03.2023
(51) Int. Cl.: G01S 17/42, G01S 17/86, G01S 17/89, G01S 17/931

(54) **KALIBRIERUNG EINES KOMBINIERTEN SENSORSYSTEMS FÜR EIN FAHRZEUG**

(30) Priorität: 23.03.2022 DE 102022202814
(71) Anmelder: Siemens Mobility GmbH, 81739 München (DE)
(72) Erfinder: Fuchs, Stefan, 15745 Wildau (DE); Kurt, Beril, 12437 Berlin (DE)
(74) Vertreter: Siemens Patent Attorneys

(57) **Zusammenfassung**

Es wird ein Verfahren zur Kalibrierung einer kombinierten Umgebungserfassung durch eine bildgebende Sensoreinheit (S1) und eine abbildende Scaneinheit (S2) beschrieben. Bei dem Verfahren wird ein Testbild (TB), das positionsabhängige Bild-Intensitätswerte (I_{TB}) aufweist, von einem Testbereich durch die bildgebende Sensoreinheit (S1) erfasst. Weiterhin werden Abtastpunkte (P3D), umfassend dreidimensionale Punkt-Positionen (P_{Lidar}) und Punkt-Intensitätswerte (I_{Lidar}), von dem Testbereich (TB) durch die abbildende Scaneinheit (S2) erfasst. Zudem erfolgt eine Kalibrierung einer Ermittlung von projizierten Positionen (P_{TB}) von auf das Testbild (TB) projizierten Abtastpunkten (P3D) auf Basis eines Vergleichs zwischen einer lokalen Änderung (DI1) der Bild-Intensitätswerte (I_{TB}) an den projizierten Positionen (P_{TB}) der auf das Testbild (TB) projizierten Abtastpunkte (P3D) im Testbild (TB) und einer lokalen Änderung (DI2) der Punkt-Intensitätswerte (I_{Lidar}) der den jeweiligen projizierten Positionen (P_{TB}) zugeordneten Abtastpunkte (P3D). Es wird auch eine Kalibrierungseinrichtung (70) beschrieben. Weiterhin wird ein Fahrzeug (2) beschrieben.

## Beschreibung

Die Erfindung betrifft ein Verfahren zur Kalibrierung einer kombinierten Umgebungserfassung durch eine bildgebende Sensoreinheit und eine abbildende Scaneinheit. Das Verfahren umfasst den Schritt des Erfassens eines Testbilds, welches positionsabhängige Bild-Intensitätswerte aufweist, von einem Testbereich durch die bildgebende Sensoreinheit und den Schritt des Erfassens von Abtastpunkten, welche dreidimensionale Positionen und Punkt-Intensitätswerte umfassen, von dem Testbereich durch die abbildende Scaneinheit.

Außerdem betrifft die Erfindung eine Kalibrierungseinrichtung. Die Kalibrierungseinrichtung umfasst eine Eingangsschnittstelle zum Empfangen eines Testbilds, welches positionsabhängige Bild-Intensitätswerte von einem Testbereich umfasst, von einer bildgebenden Sensoreinheit und zum Empfangen von Daten betreffend Abtastpunkte, die dreidimensionale Punkt-Positionen und Punkt-Intensitätswerte umfassen, von dem Testbereich von einer abbildendenden Scaneinheit.

Überdies betrifft die Erfindung ein Fahrzeug.

Insbesondere im Rahmen des autonomen oder halbautonomen Fahrens werden eine Vielzahl unterschiedlicher Arten von Sensoren eingesetzt, um die Umgebung eines Fahrzeugs zu überwachen und eine automatisierte Reaktion auf die Umgebung des Fahrzeugs ermitteln und umsetzen zu können.

Auch zumindest teilautomatisierte und fahrerlose Zugsysteme müssen die Umgebung wahrnehmen und sind daher mit einem Sensorsystem mit einer Vielzahl von Sensoren ausgestattet. Typischerweise umfassen diese Sensoren ein oder mehrere MEMS-Lidarsysteme und Kameras (MEMS ist ein Akronym für "mikromechanisches System"). Allerdings können auch andere aktive und passive Sensorsysteme eingesetzt werden. Bei typischen Anwendungen derartiger Sensorik, wie zum Beispiel Mapping, Lokalisierung oder Hinderniserkennung, sind die Pose des Lidarsystems in Bezug auf die Kamera, auch als extrinsische Parameter bezeichnet, sowie die Projektionsparameter der Kamera, auch als intrinsische Parameter bezeichnet, zur Verarbeitung der Sensordaten von Interesse. Diese Menge an Parametern kann mit Ausnahme der Verzeichnung in einer Projektionsmatrix vereint werden. Wird im Folgenden von einer Projektionsmatrix gesprochen, so soll dabei stets auch die Kombination extrinsischer und intrinsischer Parameter durch die Projektionsmatrix mit umfasst sein. Diese sogenannten extrinsischen und intrinsischen Parameter müssen zunächst (a priori) geschätzt und darüber hinaus während der Laufzeit des Sensorsystems kontinuierlich überwacht werden. Für die Realisierung eines automatisierten Zugsystems ist die Qualität, Robustheit und Effizienz der Kalibrierung des Sensorsystems von besonderer Bedeutung.

Üblicherweise werden Kalibriertargets, d.h. zur Kalibrierung eingesetzte Referenzziele bzw. Referenzobjekte, benötigt, um besondere Merkmale (charakteristische 3D-Strukturen und/oder Texturen), die sowohl in der Lidar-Messung als auch in den Kamerabildern zu erkennen sind, bereitzustellen. Diese Merkmale ermöglichen den Einsatz von 2D-3D-Registrierungstechni-ken, um die gesuchten intrinsischen und extrinsischen Parameter abzurufen. Diese Merkmale können manuell oder automatisch ausgewählt und zugeordnet werden, was entweder eine langwierige Aufgabe darstellt oder fehleranfällig ist. Zu beachten ist, dass Kameras und Lidarsysteme in der Regel mit unterschiedlichen Lichtspektren arbeiten, was die Herausforderung bei der Generierung anwendbarer Merkmale erhöht. Darüber hinaus ist eine kontinuierliche Überwachung der Kalibrierparameter während des Systembetriebs nicht möglich, wenn spezielle Kalibrierziele erforderlich sind und sich die Anordnung der Sensoren bewegt.

Ansätze zur automatischen Merkmalsextraktion nutzen normalerweise das reguläre Abtastmuster, um die Rechenlast zu minimieren. MEMS-Lidarsysteme weisen ein unregelmäßiges Scanmuster auf. Folglich überstreicht der Scanpfad während des Scannens und Messens der Umgebung eine einzige reale Weltstruktur mehrere Male aus unterschiedlichen Orientierungen.

Herkömmlich wird zur Kalibrierung eine Registrierung von charakteristischen Merkmalen, die in Lidar- und Kameramessungen ermittelt werden, durchgeführt. Ein solcher Ansatz wird auch als 2d-3d-Registrierung bezeichnet.

Diese Vorgehensweise ist in Guo et al.: An analytical leastsquares solution to the line scan LIDAR-camera extrinsic calibration problem, 2013 und Levinson and Thrun: Automatic Online Calibration of Cameras and Lasers, 2013 und Xie et al.: Infrastructure Based Calibration of a Multi-Camera and Multi-LiDAR System Using Apriltags, 2018 beschrieben.

Die erwähnten charakteristischen Merkmale können manuell oder automatisch durch Verwendung spezieller Kalibrierungstargets oder dank einer geeigneten Umgebung abgerufen werden. Speziell konstruierte Detektoren werden verwendet, um Merkmale bei der Messung automatisch zu erkennen. Der Merkmalsabgleich erfolgt mit iterativen Verfahren (z. B. RANSAC, RANSAC ist ein Resampling-Algorithmus, RANSAC ist ein Acronym für "Random Sample Consensus" und bedeutet "Übereinstimmung mit einer zufälligen Stichprobe) oder mittels Ähnlichkeitsmessungen unter der Annahme, dass eine Korrelation zwischen den erkannten Merkmalen aus der Lidar-Messung und den Kamerabildern besteht. Beispielsweise sollen Ecken in der 3D-Messung mit Ecken im Kamerabild korrelieren. Diese 2D-3D-Merkmalspaare werden verwendet, um die extrinsischen Parameter zu finden. Die Ermittlung der Merkmale ergibt eine tiefenbildartige Repräsentation der Lidar-Messung und eine Extraktion der erwähnten Merkmale mit vertretbarem Aufwand. Wird dieses Verfahren allerdings auf Anordnungen mit MEMS-basierten Lidar-Sensoreinheiten übertragen, so wird es aufgrund des unregelmäßigen Scanmusters sehr rechenaufwändig, weil ein Bild nicht gleichförmig abzutasten ist. Weiterhin werden zusätzliche Vorprozessschritte benötigt, wie zum Beispiel eine Clusterbildung oder eine Erzeugung einer k-d-Baum-Repräsentation zur Suche nach nächsten Nachbarn, um charakteristische Merkmale zu ermitteln.

Bei einer anderen herkömmlichen Herangehensweise wird die komplette 3D-Punktwolke der Lidar-Messung in das Kamerabild abgebildet. Diese Vorgehensweise ist in Pandey et al.: Automatic Extrinsic Calibration of Vision and Lidar by Maximizing Mutual Information, 2015, Taylor and Nieto: A Mutual Information Approach to Automatic Calibration of Camera and Lidar in Natural Environments, 2012 und Taylor et al.: Automatic calibration of multi-modal sensor systems using a gradient orientation measure, 2013 beschrieben.

Intensitätswerte von Lidar-Punktintensitätsmessungen können mit den Intensitätswerten im Bild verglichen werden. Dieser einfache Ansatz ist fehleranfällig, da das Lidar und die Kamera meist in unterschiedlichen Lichtspektren arbeiten. Dieses Problem kann gemildert werden, indem die Transinformation oder Syntropie von Intensitätswerten der Lidar-Messung und des Kamerabilds berechnet wird, was jedoch sehr rechenintensiv ist.

Bei einer dritten herkömmlichen Vorgehensweise werden Ansätze verfolgt, bei denen eine weniger komplizierte Kalibrierung einer Anordnung mehrerer Kameras in Kombination mit LidarSensoren verwendet wird. Diese Ansätze sind in Kim et al.: Extrinsic Calibration between Camera and LiDAR Sensors by Matching Multiple 3D Planes, 2019 und in Rajamaran et al.: Fully automatic, unified stereo camera and LiDAR-camera calibration, 2021 beschrieben.

Eine Anordnung mehrerer Kameras wird extrinsisch und intrinsisch kalibriert, um eine korrekte 3D-Darstellung der Umgebung zu erzeugen. Hierfür kann eine Stereoverarbeitung genutzt werden oder es können auf Multiple View Geometry ("Multiple View Geometry", zu Deutsch "Geometrie mit Ansichten aus mehreren Richtungen", ein Verfahren zur Rekonstruktion von 3D-Objekten auf Basis einer Folge von 2D-Bildern) basierende Ansätze verfolgt werden. Die so erzeugte 3D-Darstellung kann, mit der vom Lidar bereitgestellten 3D-Punktwolke registriert werden, um eine extrinsische Kalibrierung durchzuführen. Dieser Ansatz stützt sich wiederum auf Kalibrierungsziele, manuelle Interaktion und die unveränderliche a-priori Kalibrierung des Kamerasystems, wodurch sie nicht auf Überwachungsaufgaben in Fahrzeugen anwendbar ist.

Es besteht also die Aufgabe, ein auch während der Fahrt eines Fahrzeugs jederzeit durchführbares Kalibrierungsverfahren für eine Kombination aus einer bildgebenden Sensoreinheit und einer abbildenden Scaneinheit mit vertretbarem Rechenaufwand bereitzustellen.

Diese Aufgabe wird durch ein Verfahren zur Kalibrierung einer kombinierten Umgebungserfassung durch eine bildgebende Sensoreinheit und eine abbildende Scaneinheit gemäß Patentanspruch 1, eine Kalibrierungseinrichtung gemäß Patentanspruch 12 und ein Schienenfahrzeug gemäß Patentanspruch 13 gelöst.

Bei dem erfindungsgemäßen Verfahren zur Kalibrierung einer kombinierten Umgebungserfassung durch eine bildgebende Sensoreinheit und eine abbildende Scaneinheit erfolgt ein Schritt einer Kalibrierung einer Ermittlung von projizierten Positionen von auf das erfasste Testbild projizierten Abtastpunkten auf Basis eines Vergleichs zwischen einer lokalen Änderung der eingangs erwähnten Bild-Intensitätswerte an den projizierten Positionen der auf das Testbild projizierten Abtastpunkte im Testbild und einer lokalen Änderung der eingangs erwähnten Punkt-Intensitätswerte der den jeweiligen projizierten Positionen zugeordneten Abtastpunkte.

Als bildgebende Sensoreinheit soll in diesem Zusammenhang eine Sensoreinheit verstanden werden, mit der ein zweidimensionales Bild von ihrer Umgebung erzeugt wird. Bevorzugt umfasst die bildgebende Sensoreinheit eine optische Bildaufnahmeeinheit, besonders bevorzugt eine Bildkamera. Als abbildende Scaneinheit soll eine Scaneinheit verstanden werden, welche ihre Umgebung rasterartig abtastet und Punktdaten erfasst. Die Punktdaten umfassen Abtastpunkte von Gegenständen und den Abtastpunkten zugeordnete dreidimensionale Positionen der erfassten Abtastpunkte sowie den erfassten Abtastpunkten zugeordnete Punkt-Intensitätswerte. Als Intensitätswert soll in diesem Zusammenhang ein Wert verstanden werden, der eine scheinbare Helligkeit eines zweidimensionalen Bildpunktes oder eines dreidimensionalen Abtastpunkts angibt. Ein solcher Intensitätswert wird in der Bildverarbeitung auch als Grauwert bezeichnet. Ein solcher Grauwert kann auch unabhängig von auftretenden Farben berechnet werden und gibt in jedem Fall die scheinbare Helligkeit des erfassten Punktes an. Die scheinbare Helligkeit, auch als erfasste Helligkeit bezeichnet, ist abhängig vom Abstand, dem Reflexionsgrad der Oberfläche des erfassten Objekts und der Leuchtstärke der abbildenden Scaneinheit. Als projizierte Positionen von auf das erfasste Testbild projizierten Abtastpunkten sollen die jeweiligen zweidimensionalen Positionen der auf das erfasste Testbild projizierten dreidimensionalen Abtastpunkte der Punktdaten verstanden werden.

Anders als bei herkömmlichen Kalibrierungsverfahren erfolgt bei der erfindungsgemäßen Kalibrierung kein direkter Vergleich von jeweiligen Bild-Intensitätswerten von in ein Testbild projizierten Abtastpunkten und deren jeweiligen Punkt-Intensitätswerten, sondern es werden Werte von lokalen Änderungen der Punkt-Intensitätswerte und der den jeweiligen projizierten Positionen zugeordneten Bild-Intensitätswerte miteinander verglichen. Dabei wird davon ausgegangen, dass diese ermittelten lokalen Änderungen, wenn die bildgebende Sensoreinheit und die abbildende Scaneinheit korrekt kalibriert sind, idealerweise von derselben Position in der Umgebung stammen und daher für die bildgebende Sensoreinheit und die abbildende Scaneinheit denselben Wert aufweisen.

Hierbei muss angemerkt werden, dass eine vollständig fehlerfreie Abbildung der Abtastpunkte auf die zugehörigen Bildpunkte nur schwer möglich ist, da eine verwendete Abbildungsvorschrift bzw. Projektion immer einen Kompromiss für die Abbildung der an unterschiedlichen Positionen angeordneten Abtastpunkte auf die Bildpunkte darstellt.

Der Vergleich stellt also eine Ermittlung einer photometrischen Abweichung längs des Scanpfads der abbildenden Scaneinheit dar. Wie später noch ausführlich erläutert, können die Abweichungswerte durch eine Filtereinheit, welche Änderungen, insbesondere Kanten detektiert, ermittelt werden. Solche Filter umfassen sogenannte Faltungsmasken, die auf Bilddaten oder Datenreihen, welche auf diesen Bilddaten basieren, angewendet werden können.

Wird bei dem Vergleich ermittelt, dass die Werte der lokalen Änderungen der abbildenden Scaneinheit und der bildgebenden Sensoreinheit für alle erfassten Abtastpunkte und diesen zugeordneten Bildpunkte näherungsweise übereinstimmen, so kann davon ausgegangen werden, dass die beiden Einheiten korrekt kalibriert sind. Ergibt sich bei der Kalibrierung eine erhebliche Abweichung zwischen den Werten der lokalen Änderungen der Punkt-Intensitätswerte der abbildenden Scaneinheit und der Bild-Intensitätswerte der bildgebenden Sensoreinheit, so kann die Ermittlung der projizierten Positionen der Abtastpunkte der Punktdaten angepasst werden, bis die Abweichung einem vorbestimmten Qualitätskriterium genügt. Beispielsweise muss für eine Erfüllung des Qualitätskriteriums ein vorbestimmter Schwellwert für die Abweichung unterschritten werden.

Diese Vorgehensweise hat den Vorteil, dass die Werte der lokalen Änderungen der Bild- und Punkt-Intensitätswerte auch dann vergleichbar sind, wenn die bildgebende Sensoreinheit und die abbildende Scaneinheit unterschiedlich geartete Übertragungsmittel nutzen. Beispielsweise tritt der Fall häufig auf, dass die bildgebende Sensoreinheit elektromagnetische Wellen mit einer anderen Frequenz zur Abbildung nutzt als die abbildende Scaneinheit. Häufig kommt es zum Beispiel vor, dass die bildgebende Sensoreinheit zur Bildgebung Licht im sichtbaren Bereich nutzt und die abbildende Scaneinheit Infrarotlicht zur Abtastung der Umgebung nutzt, um Personen, die sich in der Umgebung aufhalten, nicht zu stören. Im Gegensatz zur herkömmlichen Kalibrierung werden auch keine speziellen Kalibrierungsziele benötigt, deren Eigenschaften bekannt sind, da keine Merkmalserkennung benötigt wird. Weiterhin kann die Kalibrierung bei einem bevorzugten Einsatz der bildgebenden Sensoreinheit und der abbildenden Scaneinheit an einer mobilen Einrichtung, besonders bevorzugt an einem Fahrzeug, ganz besonders bevorzugt an einem Schienenfahrzeug, an einem beliebigen Ort und auch während eines regulären Betriebs der bildgebenden Sensoreinheit und der abbildenden Scaneinheit durchgeführt werden, da die Kalibrierung unabhängig von der Umgebung ist. Beispielsweise kann die Kalibrierung mehrmals während einer Fahrt eines Fahrzeugs anhand von beliebigen Umgebungsdaten als Testbild erfolgen.

Die erfindungsgemäße Kalibrierungseinrichtung weist neben der eingangs erwähnten Eingangsschnittstelle zum Empfangen eines Testbilds, welches positionsabhängige Bild-Intensitätswerte von einem Testbereich umfasst, von einer bildgebenden Sensoreinheit und zum Empfangen von Punktdaten, welche Abtastpunkte, denen dreidimensionale Punkt-Positionen und Punkt-Intensitätswerte zugeordnet sind, von dem Testbereich umfassen, von einer abbildenden Scaneinheit eine Kalibrierungseinheit auf.

Die Kalibrierungseinheit ist dazu eingerichtet, eine Kalibrierung einer Ermittlung von projizierten Positionen von auf das Testbild projizierten Abtastpunkten auf Basis eines Vergleichs durchzuführen. Der Vergleich erfolgt zwischen einer lokalen Änderung der Bild-Intensitätswerte an den projizierten Positionen der auf das Testbild projizierten Abtastpunkte im Testbild und einer lokalen Änderung der Punkt-Intensitätswerte der den jeweiligen projizierten Positionen zugeordneten Abtastpunkte. Die erfindungsgemäße Kalibrierungseinrichtung teilt die Vorteile des erfindungsgemäßen Verfahrens zur Kalibrierung einer kombinierten Umgebungserfassung durch eine bildgebende Sensoreinheit und eine abbildende Scaneinheit.

Das erfindungsgemäße Fahrzeug, vorzugsweise ein Schienenfahrzeug, weist mindestens eine bildgebende Sensoreinheit und eine abbildende Scaneinheit auf. Weiterhin umfasst das erfindungsgemäße Schienenfahrzeug die erfindungsgemäße Kalibrierungseinrichtung. Außerdem umfasst das erfindungsgemäße Schienenfahrzeug eine Steuereinheit zur Steuerung einer Fahrt des Schienenfahrzeugs auf Basis einer von der Kalibrierungseinrichtung ermittelten Kalibrierung. Wie bereits erwähnt, kann die Kalibrierungseinrichtung vorteilhaft auch bei einer regulären Fahrt eines Schienenfahrzeugs mit einer beliebigen Umgebung als Testbild eingesetzt werden.

Ein Großteil der zuvor genannten Komponenten der Kalibrierungseinrichtung können ganz oder teilweise in Form von Softwaremodulen in einem Prozessor eines entsprechenden Rechensystems realisiert werden, z.B. von einer Steuereinheit eines Fahrzeugs, vorzugsweise eines Schienenfahrzeugs. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens, zumindest die durch einen Computer ausführbaren Schritte, insbesondere den Schritt zum Durchführen einer Kalibrierung einer Ermittlung von projizierten Positionen von auf das Testbild projizierten Abtastpunkten, auszuführen, wenn das Programm in dem Rechensystem ausgeführt wird. Ein solches Computerprogrammprodukt kann neben dem Computerprogramm gegebenenfalls zusätzliche Bestandteile, wie z. B. eine Dokumentation, und/oder zusätzliche Komponenten, auch Hardware-Komponenten, wie z.B. Hardware-Schlüssel (Dongles etc.) zur Nutzung der Software, umfassen.

Zum Transport zum Rechensystem bzw. zur Steuereinheit und/oder zur Speicherung an oder in dem Rechensystem bzw. der Steuereinheit kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Bevorzugt umfasst der Vergleich eine Ermittlung einer Korrelation zwischen den lokalen Änderungen der Bild-Intensitätswerte und der Punkt-Intensitätswerte aufweist. Eine Korrelation kann dazu genutzt werden, um einen Zusammenhang zwischen einer großen Menge von Daten zu ermitteln. Vorteilhaft lässt sich die Kalibrierung auf einer breiten Datenbasis als Grundlage für den Vergleich verwenden, so dass die Kalibrierung besonders robust und präzise ist.

In einer Ausgestaltung des erfindungsgemäßen Verfahrens zur Kalibrierung einer kombinierten Umgebungserfassung durch eine bildgebende Sensoreinheit und eine abbildende Scaneinheit umfassen die lokalen Änderungen mindestens eine der folgenden Größen:
- eine erste Ableitung der jeweiligen Intensitätswerte,
- eine zweite Ableitung der jeweiligen Intensitätswerte.

Eine erste oder zweite Ableitung kann durch Anwendung eines Filters mit einer Faltungsmaske, die über die Bild-Intensitätswerte oder Punkt-Intensitätswerte gelegt wird, vorzugsweise eines Sobel-Filters oder diskreten Laplace-Filters, ermittelt werden.

Eine Ableitung der Bild-Intensitätswerte und der Punkt-Intensitätswerte kann dann gebildet werden, wenn die genannten Werte differenzierbar sind. Wie später noch erläutert, kann ein Zwischenschritt zur Verarbeitung der erfassten Intensitätswerte erfolgen, bei dem diese Werte im Rahmen einer Filterung in eine differenzierbare Werteverteilung umgewandelt werden. Vorteilhaft geben Ableitungswerte einen genauen Grenzwert eine Änderung eines Werts an einer bestimmten Stelle an.

Bevorzugt wird bei dem in dem erfindungsgemäßen Verfahren vorgenommenen Vergleich eine projizierte Position, also eine Abbildungsvorschrift, durch Anwendung einer initialen Projektion auf die dreidimensionalen Punkt-Positionen der Abtastpunkte durchgeführt. Die initiale Projektion kann zum Beispiel eine bisher für die Ermittlung von projizierten Positionen von auf das Testbild projizierten Abtastpunkten genutzte Projektion umfassen. Möglicherweise weicht diese bisher genutzte Projektion aber von der aktuell korrekten Projektion ab, beispielsweise, weil sich die extrinsischen Parameter des Gesamtsystems geändert haben. D.h., die Ausrichtung der abbildenden Scaneinheit und der bildgebenden Sensoreinheit zueinander haben sich unbemerkt geändert. Vorteilhaft wird die initiale Projektion nun genutzt, um quasi testweise projizierte Positionen von auf das Testbild projizierten Abtastpunkten zu ermitteln, um auf diese Weise Punkt-Intensitätswerten zugeordnete Bild-Intensitätswerte zu erhalten und die lokalen Änderungen der den projizierten Positionen zugeordneten Bild-Intensitätswerte mit den entsprechenden Werten der lokalen Änderungen der Punkt-Intensitätswerte zu vergleichen.

Bevorzugt umfasst das erfindungsgemäße Verfahren ein eindeutiges Zuordnen von Bild-Intensitätswerten und Punkt-Intensitätswerten zu den jeweiligen projizierten Positionen. Vorteilhaft werden eindeutige Wertepaare von Bild-Intensitätswerten und Punkt-Intensitätswerten gebildet, auf deren Basis ein korrekter Vergleich zur Ermittlung der Güte der aktuell genutzten Projektion erfolgen kann.

Bevorzugt wird bei dem erfindungsgemäßen Verfahren eine Reihenfolge der jeweiligen projizierten Positionen festgelegt. Diese Reihenfolge dient dazu, eine eindeutige Definition einer lokalen Änderung der Intensitätswerte zu erzielen. Vorzugsweise erfolgt die Festlegung der Reihenfolge in Abhängigkeit von einer Aufnahmetrajektorie der Punktdaten. D.h., bei der Aufnahme nacheinander erfasste benachbarte Abtastpunkte liegen auch in der Reihenfolge benachbart, so dass sinnvoll Werte für eine lokale Änderung jeweils zwischen den Intensitätswerten benachbarter Abtastpunkte und den Intensitätswerten benachbarter Bildpunkte an den projizierten Positionen der auf das Testbild projizierten Abtastpunkte ermittelbar sind.

Bevorzugt erfolgt mithin das Ermitteln der lokalen Änderung der Bild-Intensitätswerte an den projizierten Positionen durch Vergleich von Bild-Intensitätswerten benachbarter projizierter Positionen in der festgelegten Reihenfolge.

Bevorzugt erfolgt auch das Ermitteln der lokalen Änderung der zugeordneten Punkt-Intensitätswerte durch Vergleich der eindeutig zugeordneten Punkt-Intensitätswerte. Damit ist gemeint, dass für die einzelnen Punkt-Intensitätswerte aufgrund der eindeutigen Zuordnung exakt bekannt ist, welchen projizierten Positionen und damit welchen Bild-Intensitätswerten sie zugeordnet sind. Vorteilhaft lassen sich so auch die Werte der lokalen Änderung der Punkt-Intensitätswerte und der lokalen Änderung der Bild-Intensitätswerte einander eindeutig zuordnen.

Auf Basis der ermittelten Werte für die lokalen Änderungen der Punkt-Intensitätswerte und der Bild-Intensitätswerte wird bevorzugt eine Abweichung zwischen den ermittelten und einander zugeordneten Werten der lokalen Änderungen ermittelt. Die Abweichung gibt ein Maß für die Güte der Kalibrierung und insbesondere der verwendeten initialen Projektion an. Ist die Abweichung hoch, so muss die Kalibrierung mit einer korrigierten Projektion fortgesetzt werden, unterschreitet die Abweichung einen vorbestimmten Schwellwert, so kann die Kalibrierung abgeschlossen werden.

Bevorzugt umfasst das Festlegen der Reihenfolge der jeweiligen projizierten Positionen das Festlegen eines eindimensionalen Intensitätsmusters für die Bild-Intensitätswerte und die Punkt-Intensitätswerte. Ein solches Intensitätsmuster weist eine Mehrzahl in einer Richtung angeordneter benachbarter, vorzugsweise gleich großer, vorzugsweise quadratischer Felder auf, die jeweils einen Intensitätswert repräsentieren. Vorteilhaft kann ein skalarer Änderungswert besonders einfach auf Basis eines solchen eindimensionalen Intensitätsmusters ermittelt werden.

Bevorzugt werden die Bild-Intensitätswerte und/oder die Punkt-Intensitätswerte in dem eindimensionalen Intensitätsmuster in der Reihenfolge der Erfassung der dreidimensionalen Abtastpunkte der Punktdaten angeordnet. Wie bereits erwähnt, werden üblicherweise benachbarte Abtastpunkte nacheinander erfasst, so dass eine Änderung von Intensitätswerten sinnvoll anhand von in der Reihenfolge benachbarten Intensitätswerten ermittelt werden kann.

Besonders bevorzugt werden im Rahmen des erfindungsgemäßen Verfahrens die dreidimensionalen Abtastpunkte entlang einer Trajektorie gewonnen. Dann sind in dem eindimensionalen Intensitätsmuster die Bild-Intensitätswerte und/oder die Punkt-Intensitätswerte in der Reihenfolge der Erfassung der Punktdaten entlang dieser Trajektorie angeordnet. Vorteilhaft werden auf der Trajektorie benachbarte Abtastpunkte auch bei der Festlegung des eindimensionalen Intensitätsmusters benachbart angeordnet, so dass insbesondere ein Wert einer Änderung einer Intensität bezogen auf das eindimensionale Intensitätsmuster auch in dem Testbild und/oder den erfassten Punktdaten eine sinnvolle Größe darstellt.

Bevorzugt wird bei der Ermittlung der lokalen Änderungen der Bild-Intensitätswerte und/oder der lokalen Änderungen der Punkt-Intensitätswerte ein Strukturtensor auf die in der festgelegten Reihenfolge angeordneten Punkt-Intensitätswerte und/oder Bild-Intensitätswerte angewendet. Durch die Anwendung eines Strukturtensors kann allgemein ein Gradient ermittelt werden, in dessen Richtung eine Ableitung am größten ist. Außerdem eignet sich ein Strukturtensor zur Kantendetektion. Vorzugsweise kann jeweils in dem Bildpunkt und jedem Punkt der Punktdaten ein Gradient zur Ermittlung einer Änderung der Intensitätswerte berechnet werden.

Bevorzugt umfasst der Strukturtensor einen Sobel-Operator, mit dem eine Änderung eines Intensitätswerts ermittelbar ist. Mit dem Sobel-Operator werden hohe Frequenzen mit Grauwerten dargestellt. Die Bereiche der größten Intensität sind dort, wo sich die Helligkeit des Originalbildes, in diesem Fall die Helligkeit der Intensitäten in der festgelegten Reihenfolge, am stärksten ändert.

Man kann den diskreten Sobel-Operator auch als eindimensionalen Operator auf eine Datenreihe anwenden. In diesem Fall vereinfacht sich die Maske zu einem Vektor, beispielsweise [1,0,-1]. Das heißt, die benachbarten Werte werden jeweils mit unterschiedlichem Vorzeichen addiert und die so ermittelte Summe als neuer Wert an die jeweilige Stelle in der Sequenz eingetragen.

Beispielsweise ergibt sich für eine Faltung der Sequenz [1,1,2,1,1] mit dem Sobel-Operator [1,0,-1] folgendes Ergebnis: [n.a., -1, 0, 1, n.a.] (n.a. = nicht angegeben). Den Rand kann man mit Sonderfällen ermitteln. Das wird hier vernachlässigt.

Der Strukturtensor kann auch einen diskreten Laplace-Operator umfassen, der ebenfalls als Kantendetektor einsetzbar ist und eine Änderung eines Intensitätswerts ermitteln kann.

Bei einem diskreten Laplace-Operator erfolgt eine Faltung mit [1 -2 1]. Die Anwendung des so definierten Laplace-Operators mit einer Sequenz [1, 1, 2, 1, 1], führt zu dem Ergebnis [n.a., 1, -2, 1, n. a.].

In einer bevorzugten Variante des erfindungsgemäßen Verfahrens umfasst der Schritt des Durchführens einer Kalibrierung eine Ermittlung eines Minimums der Abweichung zwischen den ermittelten lokalen Änderungen der Bild-Intensitätswerte und den ermittelten lokalen Änderungen der Punkt-Intensitätswerte. Vorteilhaft erfolgt im Rahmen der Kalibrierung eine Minimierung eines Fehlers bei der Übertragung der Abtastpunkte der Punktdaten in das Testbild.

Anders ausgedrückt umfasst der Schritt des Durchführens einer Kalibrierung das Ermitteln einer kalibrierten Projektion zwischen den dreidimensionalen Punkt-Positionen der Abtastpunkte der Punktdaten und den projizierten Positionen in dem Testbild. Dabei wird davon ausgegangen, dass die bei der Kalibrierung verwendete initiale Projektion möglicherweise nicht die wahre Beziehung zwischen der Pose der abbildenden Scaneinheit und der bildgebenden Sensoreinheit wiedergibt.

Daher wird im Rahmen der Kalibrierung die initiale Projektion in Abhängigkeit von der ermittelten Abweichung angepasst.

Bevorzugt wird die kalibrierte Projektion derart ermittelt, dass bei deren Anwendung die Abweichung zwischen den Werten der lokalen Änderungen der Bild-Intensitätswerte und den Werten der lokalen Änderungen der jeweils zugeordneten Punkt-Intensitätswerte minimal ist. In diesem Fall werden die Abtastpunkte der Punktdaten auf das Testbild mit optimaler Genauigkeit projiziert, so dass die Kalibrierung optimiert ist.

Alternativ kann der Kalibrierungsprozess auch bei einem Erreichen der Abweichung eines Schwellwerts beendet werden.

Bevorzugt wird die ermittelte Abweichung zwischen den ermittelten lokalen Änderungen der Bild-Intensitätswerte und den ermittelten lokalen Änderungen der Punkt-Intensitätswerte derart berechnet, dass sie die Summe der Quadrate der Differenzen zwischen den Werten der lokalen Änderungen der Bild-Intensitätswerte und den Werten der lokalen Änderungen der jeweils zugeordneten Punkt-Intensitätswerte umfasst. Vorteilhaft wird das Minimum der Abweichung als globales Maß über alle Abtastpunkte ermittelt, so dass die Kalibrierung besonders zuverlässig wird.

Besonders effektiv ist die Kalibrierung, wenn das Durchführen der Kalibrierung mit einer Methode der lokalen nichtlinearen Optimierung zur Berechnung der kalibrierten Projektion verbunden wird. Mit Hilfe solcher in der Regel iterativen Näherungsverfahren wird in jedem Schritt eine exaktere Projektion ermittelt, welche dann eine Basis für die ermittelte Projektion im nächsten Schritt bildet. Beispiele für Optimierungsverfahren dieser Kategorie sind der Downhill-Simplex-Algorithmus, das Gauss-Newton-Verfahren oder der Levenberg-Marquardt-Algorithmus.

Einige dieser Verfahren verlangen nach der 1. oder auch 2. Ableitung der Loss-Funktion hinsichtlich der gesuchten Projektionsparameter. In diesem Fall kann die ermittelte Jakobi-Matrix der Loss-Funktion als Qualitätskriterium für die ermittelte Projektion genutzt werden. Die Projektionsparameter umfassen unter anderem Rotation, Translation oder Brennweite und optisches Zentrum, und weisen daher eine unterschiedliche Skalierung auf. Für eine effiziente und robuste Optimierung ist es notwendig, die Größenordnungen dieser Parameter anzugleichen.

Vorteilhaft kann als Qualitätskriterium für eine in dem Optimierungsverfahren ermittelte Projektion eine bei dem Optimierungsverfahren ermittelte Jakobi-Matrix genutzt werden. Dabei ergeben hohe Werte von Einträgen in der Jakobi-Matrix einen Hinweis, dass das Optimierungsverfahren noch nicht bei dem Minimum angekommen ist.

Besonders bevorzugt umfasst die kalibrierte Projektion eine Projektionsmatrix. Vorteilhaft kann eine Projektionsmatrix mit den vorgenannten Optimierungsverfahren verarbeitet werden, um als konkretes Ergebnis der Kalibrierung eine kalibrierte Projektionsmatrix zu ermitteln, welche im weiteren Betrieb zur korrekten Umrechnung von Abtastpunkten auf Bildpunkte genutzt werden kann. Repräsentiert die Projektionsmatrix nur die extrinsischen Parameter der Projektion, so können zusätzlich auch optimierte Projektionsparameter der Kamera, auch als intrinsische Parameter bezeichnet, mit in den Optimierungsprozess einfließen bzw. bei diesem Optimierungsprozess ebenfalls ermittelt werden.

Wie bereits eingangs erwähnt, können die extrinsischen und intrinsischen Parameter mit Ausnahme der Verzeichnung auch in einer Projektionsmatrix vereint werden.

Bevorzugt erfolgt die Kalibrierung auf Basis von mehreren zeitlich nacheinander erfassten Testbildern und einem mehrfachen zeitlich nacheinander durchgeführten Erfassen von Abtastpunkten von dem Testbereich. Der gesamte Prozess kann also beispielsweise auch auf mehreren Bild-Scanaufnahme-Paaren parallel durchgeführt werden, z. B. hintereinander während der Fahrt aufgenommen oder zu unterschiedlichen Zeitpunkten. Damit wird das Verfahren robuster und das Ergebnis unter Umständen auch genauer.

Bevorzugt umfasst in dem erfindungsgemäßen Verfahren die abbildende Scaneinheit eine der folgenden Sensorarten:
- einen Lidarsensor,
- einen Infrarotsensor,
- einen Radarsensor.

Ganz besonders bevorzugt umfasst die Scaneinheit einen oder mehrere MEMS-basierte Lidarsensoren. MEMS-basierte Systeme umfassen Inertialsensoren, d.h. Beschleunigungs- und Drehsensoren. Sie werden zur Lageerkennung eingesetzt. Sie werden auch als mechanische Bildstabilisatoren für bildgebende Sensoreinheiten, insbesondere Kameras, oder abbildende Scaneinheiten, insbesondere Lidar-Sensoreinheiten eingesetzt. Werden für die Steuerung der Pose, insbesondere der abbildenden Scaneinheit, mikroelektronische Bauelemente eingesetzt, so ergibt sich aufgrund einer ständigen Ausgleichsbewegung der MEMS-basierten Stabilisatoren ein unregelmäßiges Scanmuster um einen eigentlich anvisierten Punkt in der Umgebung herum.

Die Herausforderung bei MEMS-basierten Lidarsystemen ist also das unregelmäßige Scanpattern (kein reguläres Raster, keine gleichmäßigen Winkelabstände zwischen den Mess-Strahlen). Damit werden Standardverfahren zum Clustering oder zur Kantendetektion sehr viel rechenaufwändiger.

Vorteilhaft kann dieses Scanmuster als Trajektorie zur Kalibrierung einer abbildenden Scaneinheit mit einer bildgebenden Sensoreinheit genutzt werden. Außerdem treten bei der erfindungsgemäßen Kalibrierung nicht die Probleme auf, die bei herkömmlichen Kalibrierverfahren bei MEMS-basierten abbildenden Scaneinheiten auftreten. Insbesondere entfallen aufwändige Rechenschritte, wie zum Beispiel Prozessschritte zur Clusterbildung oder eine Erzeugung einer k-d-Baum-Repräsentation für eine Suche nach nächsten Nachbarn, wie sie bei herkömmlichen Ansätzen notwendig sind.

Die von den genannten Sensoren zur Detektion verwendeten Wellen, vorzugsweise elektromagnetische Wellen, weisen üblicherweise ein sich von sichtbarem Licht unterscheidendes Wellenspektrum bzw. Frequenzspektrum auf, so dass eine direkte Vergleichbarkeit mit Bilddaten im Rahmen einer Kalibrierung nicht gut funktioniert. Hier ist das erfindungsgemäße Verfahren besonders vorteilhaft, da es auch mit unterschiedlichen Sensoren mit unterschiedlichen Arten von Wellen und unterschiedlichen Wellenspektren bzw. Frequenzspektren funktioniert.

Wie bereits erwähnt, funktioniert das erfindungsgemäße Verfahren vorteilhaft auch dann, wenn die bildgebende Sensoreinheit und die abbildende Scaneinheit als Detektionsmittel Wellen, vorzugsweise elektromagnetische Wellen, mit einem unterschiedlichen Frequenzspektrum aufweisen. Beispielsweise kann die bildgebende Sensoreinheit eine optische Kamera umfassen und damit Licht im sichtbaren Bereich erfassen und die abbildende Scaneinheit ein Infrarot-Lidar umfassen, welches zur Abtastung der Umgebung für den Menschen nicht direkt sichtbares Licht im Infrarotbereich nutzt. Während Intensitätswerte dieser unterschiedlichen Sensoren nur schwer miteinander vergleichbar sind, funktioniert ein Abgleich der Werte der lokalen Änderung bzw. der ersten oder zweiten Ableitung der Intensitätswerte sehr gut.

Die beschriebene Kalibrierung umfasst bevorzugt eine Kalibrierung extrinsischer Parameter des Systems aus bildgebender Sensoreinheit und abbildendender Scaneinheit. Darunter ist zu verstehen, dass die für die Minimierung verwendeten Variablen die Pose, d.h. Position und Orientierung der bildgebenden Sensoreinheit relativ zu der abbildenden Scaneinheit umfassen.

Die beschriebene Kalibrierung kann auch eine Kalibrierung intrinsischer Parameter umfassen. Darunter sind die Projektionsparameter der bildgebenden Sensoreinheit zu verstehen. Diese umfassen beispielsweise die Brennweite, das optische Zentrum und die Verzeichnungsparameter. Werden beide Arten von zu kalibrierenden Parametern berücksichtigt, so wird die Kalibrierung besonders exakt.

Bevorzugt umfasst die erfindungsgemäße Kalibrierungseinrichtung eine Positionsermittlungseinheit zum Ermitteln von den Positionen der dreidimensionalen Abtastpunkte der Punktdaten jeweils zugeordneten Positionen in dem Testbild. Für die Ermittlung der Positionen in dem Testbild wird bevorzugt eine Projektion, besonders bevorzugt eine Projektionsmatrix verwendet. Teil der erfindungsgemäßen Kalibrierungseinrichtung ist vorzugsweise auch eine Intensitätsermittlungseinheit zum Ermitteln von den Punkt-Intensitätswerten jeweils zugeordneten Bild-Intensitätswerten des Testbilds an den ermittelten Positionen in dem Testbild. Die erfindungsgemäße Kalibrierungseinrichtung umfasst bevorzugt auch eine Änderungsermittlungseinheit zum Ermitteln von lokalen Änderungen der Punkt-Intensitätswerte und jeweils zugeordneten lokalen Änderungen der Bild-Intensitätswerte. Weiterhin umfasst die erfindungsgemäße Kalibrierungseinrichtung bevorzugt eine Vergleichseinheit zum Ermitteln einer Abweichung auf Basis der lokalen Änderungen der Bild-Intensitätswerte und auf Basis der lokalen Änderungen der Punkt-Intensitätswerte. Teil der erfindungsgemäßen Kalibrierungseinrichtung ist zudem eine Projektionsermittlungseinheit zum Ermitteln einer angepassten Projektion, vorzugsweise einer angepassten Projektionsmatrix. Die Projektionsmatrix kann auf Basis einer aus der ermittelten Abweichung ermittelbaren Jakobi-Matrix ermittelt werden. Es soll an dieser Stelle nochmals erwähnt werden, dass die beschriebene Vorgehensweise nur beispielhaft ist und unterschiedliche Arten von Optimierungs-Algorithmen für eine iterative Ermittlung von extrinsischen und intrinsischen Parametern für eine solche Kalibrierung existieren, die bereits weiter oben im Text genannt wurden.

Außerdem umfasst die erfindungsgemäße Kalibrierungseinrichtung eine Qualitätskontrolleinheit zum Ermitteln, ob die Qualität der Optimierung ausreichend ist. Dafür kann ebenfalls eine auf Basis der Abweichung ermittelte Jakobi-Matrix herangezogen werden.

Die Erfindung wird im Folgenden unter Hinweis auf die beigefügten Figuren anhand von Ausführungsbeispielen noch einmal näher erläutert. Es zeigen:
FIG 1 ein Flussdiagramm, welches ein Verfahren zur Kalibrierung einer kombinierten Umgebungserfassung durch eine bildgebende Sensoreinheit und eine abbildende Scaneinheit zur Erfassung der Umgebung des Fahrzeugs gemäß einem Ausführungsbeispiel der Erfindung veranschaulicht, wobei als abbildende Scaneinheit eine Lidar-Sensoreinheit und als bildgebende Sensoreinheit eine optische Kamera eingesetzt wird,
FIG 2 ein Flussdiagramm, welches einen in FIG 1 veranschaulichten Kalibrierschritt im Detail verdeutlicht,
FIG 3 ein Flussdiagramm, welches den in FIG 2 gezeigten Schritt 1.IIIb, bei dem Kandidaten-Positionen projizierter Abtastpunkte im Testbild jeweils zugeordnete Bild-Intensitätswerte ermittelt werden, im Detail veranschaulicht,
FIG 4 ein Flussidagramm, welches den in FIG 1 gezeigten Schritt 1.II, bei dem Punkt-Intensitätswerte ermittelt werden, im Detail veranschaulicht,
FIG 5 ein Flussdiagramm, welches die in FIG 2 gezeigten Schritte 1.IIIc und 1.IIId sowie 1.IIIe, bei denen Werte von lokalen Änderungen der bei den Schritten 1.II und 1.IIIb erzeugten Punkt-Intensitätswerte bzw. Bild-Intensitätswerte ermittelt werden und eine Ermittlung einer Korrelation zwischen den ermittelten Werten von Änderungen erfolgt, im Detail veranschaulicht,
FIG 6 eine symbolhafte Darstellung des in FIG 1 bis FIG 5 veranschaulichten Verfahrens,
FIG 7 eine schematische Darstellung einer Kalibrierungseinrichtung gemäß einem Ausführungsbeispiel der Erfindung,
FIG 8 eine schematische Darstellung einer Kalibrierungseinheit der in FIG 7 veranschaulichten Kalibrierungseinrichtung,
FIG 9 eine schematische Darstellung eines Schienenfahrzeugs gemäß einem Ausführungsbeispiel der Erfindung.

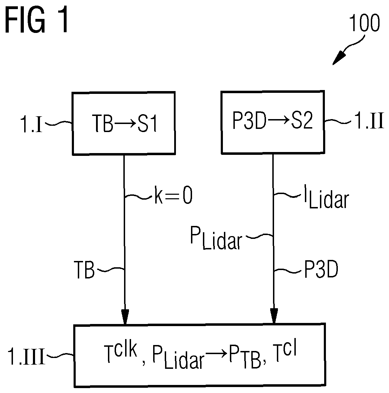

In FIG 1 ist ein Flussdiagramm 100 gezeigt, welches ein Verfahren zur Kalibrierung einer kombinierten Umgebungserfassung durch eine bildgebende Sensoreinheit und eine abbildende Scaneinheit zur Erfassung der Umgebung eines Fahrzeugs gemäß einem Ausführungsbeispiel der Erfindung veranschaulicht. Bei dem in FIG 1 gezeigten Ausführungsbeispiel wird als bildgebende Sensoreinheit eine optische Kamera und als abbildende Scaneinheit eine Lidar-Sensoreinheit eingesetzt. Die Kamera und die Lidar-Sensoreinheit sind so eingerichtet, dass sich ihr Erfassungsbereich überschneidet. Ziel des Verfahrens ist es nun, eine korrekte Projektion, d.h. eine mathematische Abbildungsvorschrift zur Projektion zwischen den Lidar-Sensordaten und den Kameradaten zu ermitteln.

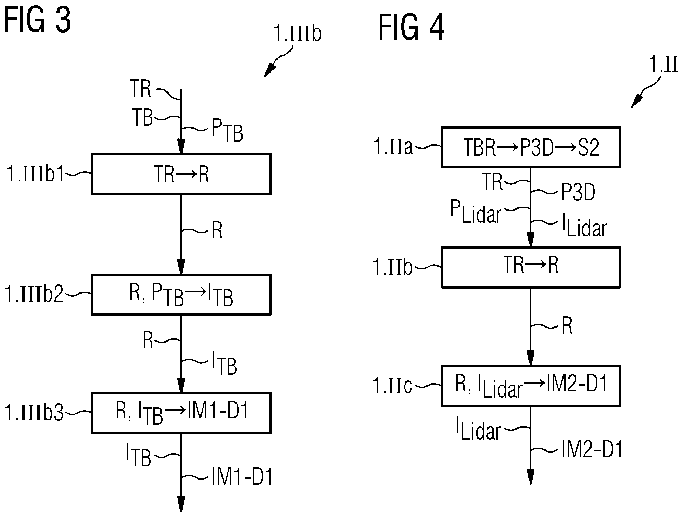

Bei dem Schritt 1.1 wird ein Testbild TB von einem Testbereich TBR (siehe FIG 3), beispielsweise ein Teilbereich der Umgebung der Kamera, durch die Kamera S1 aufgenommen. Das Testbild TB weist Teilbereiche mit unterschiedlichen Intensitätswerten, beispielsweise unterschiedlichen Graustufen, auf.

Bei dem Schritt 1.II werden als dreidimensionale Abtastpunkte P3D sogenannte Lidarpunkte von dem Testbereich durch die Lidar-Sensoreinheit S2 erfasst. Anschaulich gesprochen liegen die Lidarpunkte in dem Testbild TB. Mit der Erfassung der Lidarpunkte werden auch deren Positionen P_{Lidar} und Punkt-Intensitätswerte I_{Lidar} ermittelt.

Bei dem Schritt 1.III erfolgt die eigentliche Kalibrierung. Dabei wird eine Ermittlung von projizierten Positionen P_{TB} von auf das Testbild TB projizierten Lidarpunkten P3D kalibriert. Die Projektion kann durch eine im Laufe der Kalibrierung iterativ angepasste Projektionsmatrix T^{clk} (für Iterationsschritte k = 0, 1, 2...) erfolgen. Die Kalibrierung kann extrinsische Parameter und intrinsische Parameter umfassen. Als Ergebnis der Kalibrierung werden kalibrierte Parameter, beispielsweise in Form einer Projektionsmatrix T^{cl} ausgegeben, die die kalibrierte Ermittlung von projizierten Positionen P_{TB} von auf das Testbild TB projizierten Lidarpunkten P3D wiedergibt.

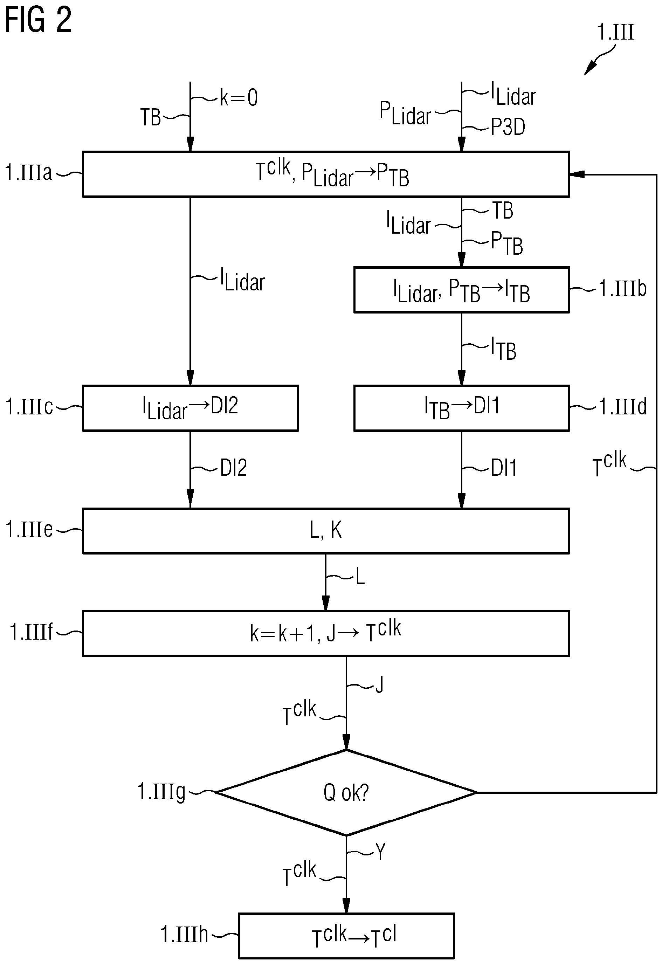

In FIG 2 ist ein Flussdiagramm gezeigt, welches den in FIG 1 gezeigten Schritt 1.III zur Kalibrierung der Ermittlung von projizierten Positionen P_{TB} von auf das Testbild TB projizierten Lidarpunkten P3D im Detail wiedergibt.

Bei dem Schritt 1.IIIa werden den Positionen P_{Lidar} der Lidarpunkte P3D jeweils zugeordnete Kandidaten-Positionen P_{TB} in dem Testbild TB ermittelt.

Die Ermittlung erfolgt mit Hilfe einer initialen Projektion T^{c10} bzw. T^{clk} mit k = 0 bei dem ersten, d.h. k+1-ten Iterationsschritt, die zum Beispiel die noch zu kalibrierende Projektion umfasst.

Bei dem Schritt 1.IIIb werden den Kandidaten-Positionen P_{TB} im Testbild TB jeweils zugeordnete Bild-Intensitätswerte I_{TB} ermittelt.

Bei dem Schritt 1.IIIc werden Änderungswerte DI2 der Punkt-Intensitätswerte I_{Lidar} auf Basis der Punkt-Intensitätswerte I_{Lidar} ermittelt.

Bei dem Schritt 1.IIId werden Änderungswerte DI1 der Bild-Intensitätswerte I_{TB} auf Basis der Bild-Intensitätswerte I_{TB} ermittelt.

Schließlich wird bei dem Schritt 1.IIIe eine Abweichung L auf Basis der Änderungswerte DI1 der Bild-Intensitätswerte I_{TB} und auf Basis der Änderungswerte DI2 der Punkt-Intensitätswerte I_{Lidar} ermittelt.

Die Abweichung L ist ein Maß für eine Korrelation K zwischen den ermittelten Werte DI1, DI2 von Änderungen der bei den Schritten 1.II und 1.IIIb erzeugten Punkt-Intensitätswerte I_{Lidar} bzw. Bild-Intensitätswerte I_{TB}.

Die Abweichung L errechnet sich zum Beispiel aus der Summe der Quadrate der Differenzen zwischen den Änderungen DI1 der Bild-Intensitätswerte I_{TB} und den Änderungen DI2 der jeweils zugeordneten Punkt-Intensitätswerte I_{Lidar}.

Bei dem Schritt 1.IIIf wird auf Basis einer Iteration eines nicht-linearen Optimierers eine angepasste neue Projektionsmatrix T^{CL1} bzw. allgemein für den k+1-ten Iterationsschritt und ein Inkrement k = k+1 eine neue angepasste Projektionsmatrix T^{clk} ermittelt. Beispielsweise kann auf Basis der Abweichung L eine Jakobi-Matrix J ermittelt werden und auf deren Basis eine angepasste neue Projektionsmatrix T^{CL1} bzw. allgemein für den k+1-ten Iterationsschritt und ein Inkrement k = k+1 eine neue angepasste Projektionsmatrix T^{clk} ermittelt werden.

Bei dem Schritt 1.IIIg wird ermittelt, ob die Qualität der Optimierung ausreichend ist. Die Qualität der Optimierung kann aus dem Restfehler oder der ermittelten Jakobimatrix J oder einer ebenfalls anhand der Abweichung ermittelten Hesse-Matrix ermittelt werden.

Reicht die Qualität Q der Näherung aus, was in FIG 1 mit "Y" gekennzeichnet ist, so wird zu dem Schritt 1.IIIh übergegangen.

Reicht die Qualität Q noch nicht, was in FIG 1 mit "n" gekennzeichnet ist, so wird zu dem Schritt 1.IIIa zurückgekehrt und der nächste Iterationsschritt mit der bei dem Schritt 1.IIIf erzeugten neuen angepassten Projektionsmatrix T^{clk} wiederholt.

Bei dem Schritt 1.IIIh wird die als qualitativ ausreichend eingestufte angepasste Projektionsmatrix T^{clk} als kalibrierte Projektion T^{cl} ausgegeben.

In FIG 3 ist ein Flussdiagramm gezeigt, welches den in FIG 2 gezeigten Schritt 1.IIIb im Detail veranschaulicht. Bei dem Schritt 1.IIIb1 wird eine Reihenfolge der bei dem Schritt 1.IIIa ermittelten Kandidaten-Positionen P_{TB} in dem Testbild TB auf Basis der bei der Erfassung der Abtastpunkte P3D genutzten Trajektorie TR festgelegt.

Diese Reihenfolge dient dazu, eine eindeutige Definition einer lokalen Änderung der bei dem Schritt 1.IIIb noch zu ermittelnden Intensitätswerte I_{TB} zu erzielen. Die Reihenfolge R ergibt sich aus der Reihenfolge der Aufnahme der nacheinander erfassten benachbarten Abtastpunkte P3D. Diese liegen auch in der nun festgelegten Reihenfolge R benachbart, so dass bei dem später folgenden Schritt 1.IIId sinnvoll Werte für eine lokale Änderung DI1 zwischen den Intensitätswerten I_{TB} benachbarter Bildpunkte an den projizierten Positionen P_{TB} der bei dem in FIG 2 gezeigten Schritt 1.IIIa auf das Testbild TB projizierten Lidarpunkte bzw. Abtastpunkte P3D ermittelbar sind.

Bei dem Schritt 1.IIIb2 werden auf Basis der festgelegten Reihenfolge R in dieser Reihenfolge R die den bei dem Schritt 1.IIIa ermittelten Kandidaten-Positionen P_{TB} im Testbild TB jeweils zugeordneten Bild-Intensitätswerte I_{TB} ermittelt

Bei dem Schritt 1.IIIb3 wird auf Basis der Bild-Intensitätswerte I_{TB} ein eindimensionales Intensitätsmuster IM1-D1 der Bild-Intensitätswerte I_{TB} in der festgelegten Reihenfolge R der Erfassung der Abtastpunkte P3D entlang dieser Trajektorie TR generiert. Das Intensitätsmuster IM1-D1 weist eine Mehrzahl in einer Richtung angeordneter benachbarter gleich gro-ßer Felder auf, die jeweils einen Bild-Intensitätswert I_{TB} repräsentieren. Auf diese Weise werden auf der Trajektorie TR benachbarte Lidarpunkte P3D auch bei der Festlegung des eindimensionalen Intensitätsmusters IM1-D1 benachbart angeordnet, so dass insbesondere ein Wert DI1 einer Änderung einer Intensität bezogen auf das eindimensionale Intensitätsmuster IMID auch in dem Testbild TB eine sinnvolle Größe darstellt.

In FIG 4 ist ein Flussdiagramm gezeigt, welches den in FIG 1 gezeigten Schritt 1.II im Detail veranschaulicht.

Bei dem Schritt 1.IIa werden Lidarpunkte P3D von dem Testbereich TBR durch die Lidar-Sensoreinheit S2 erfasst. Mit der Erfassung der Lidarpunkte P3D werden auch deren Positionen P_{Lidar} und Punkt-Intensitätswerte I_{Lidar} ermittelt.

Bei dem Schritt 1.IIb wird nun eine Reihenfolge R der bei dem Schritt 1.IIa erfassten Lidarpunkte P3D auf Basis der bei der Abtastung der Lidarpunkte P3D genutzten Trajektorie TR festgelegt.

Diese Reihenfolge R dient ebenfalls wie in dem Schritt 1.IIIb dazu, eine eindeutige Definition einer lokalen Änderung der bei dem Schritt 1.II zu ermittelnden Intensitätswerte I_{Lidar} zu erzielen. Die Reihenfolge R ergibt sich aus der Reihenfolge der Aufnahme der nacheinander erfassten benachbarten Lidarpunkte P3D. Diese liegen auch in der nun festgelegten Reihenfolge R benachbart, so dass bei dem später folgenden Schritt 1.IIIc sinnvoll Werte für eine lokale Änderung DI2 zwischen den Intensitätswerten I_{Lidar} benachbarter Lidarpunkte ermittelbar sind.

Bei dem Schritt 1.IIc wird auf Basis der Punkt-Intensitätswerte I_{Lidar} ein eindimensionales Intensitätsmuster IM2-D1 der Punkt-Intensitätswerte I_{Lidar} in der festgelegten Reihenfolge R der Erfassung der Abtastpunkte P3D entlang dieser Trajektorie TR generiert. Das eindimensionale Intensitätsmuster IM2-D1 weist eine Mehrzahl in einer Richtung angeordneter benachbarter gleich großer Felder auf, die jeweils einen Punkt-Intensitätswert I_{Lidar} repräsentieren. Auf diese Weise werden auf der Trajektorie TR benachbarte Lidarpunkte P3D auch bei der Festlegung des eindimensionalen Intensitätsmusters IM2-D1 benachbart angeordnet, so dass insbesondere ein Wert DI2 einer Änderung eines Punkt-Intensitätswerts I_{Lidar} bezogen auf das eindimensionale Intensitätsmuster IM2-D1 auch mit der Änderung auf der Trajektorie TR korrespondiert.

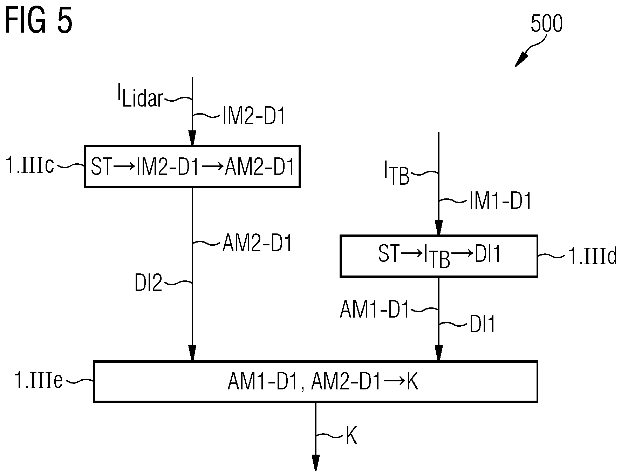

In FIG 5 ist ein Flussdiagramm 500 gezeigt, welches die in FIG 2 gezeigten Schritte 1.IIIc und 1.IIId sowie 1.IIIe im Detail veranschaulicht. Bei den Schritten 1.IIIc und 1.IIId werden jeweils Werte D1, D2 von Änderungen der bei den Schritten 1.II und 1.IIIb erzeugten Punkt-Intensitätswerte I_{Lidar} bzw. Bild-Intensitätswerte I_{TB} ermittelt. Bei dem Schritt 1.IIIe erfolgt einer Ermittlung einer Korrelation K zwischen den ermittelten Werten DI1, DI2 von Änderungen der bei den Schritten 1.II und 1.IIIb erzeugten Punkt-Intensitätswerte I_{Lidar} bzw. Bild-Intensitätswerte I_{TB}.

Bei dem Schritt 1.IIIc wird ein Strukturtensor ST auf die in einem eindimensionalen Intensitätsmuster IM2-D1 angeordneten Punkt-Intensitätswerte I_{Lidar} angewendet. Die Generierung des eindimensionalen Intensitätsmusters IM2-D1 ist in FIG 4 veranschaulicht.

Durch die Anwendung eines Strukturtensors ST wird eine Glättung der Punkt-Intensitätswerte I_{Lidar} in dem eindimensionalen Intensitätsmuster IM2-D1 erzielt. Zudem wird durch den Strukturtensor ST eine Ableitung der geglätteten Punkt-Intensitätswerte I_{Lidar} für jedes Feld des eindimensionalen Intensitätsmusters IM2-D1 ermittelt. Auf diese Weise wird ein eindimensionales Änderungsmuster AM2-D1 der Punkt-Intensitätswerte I_{Lidar} generiert.

Bei dem Schritt 1.IIId wird analog zu Schritt 1.IIIc ein Strukturtensor ST auf die in einem eindimensionalen Intensitätsmuster IM1-D1 angeordneten Bild-Intensitätswerte I_{TB} angewendet. Die Generierung des eindimensionalen Intensitätsmusters IM1-D1 ist in FIG 3 veranschaulicht. Auf diese Weise wird ein eindimensionales Änderungsmuster AM1-D1 der Bild-Intensitätswerte I_{TB} generiert.

Bei dem Schritt 1.IIIe erfolgt eine Ermittlung einer Korrelation K zwischen dem ermittelten eindimensionalen Änderungsmuster AM1-D1 der Bild-Intensitätswerte I_{TB} und dem ermittelten eindimensionalen Änderungsmuster AM2-D1 der Punkt-Intensitätswerte I_{Lidar}. Die Korrelation K kann zum Beispiel durch eine die Abweichung L ausdrückende Loss-Funktion repräsentiert werden.

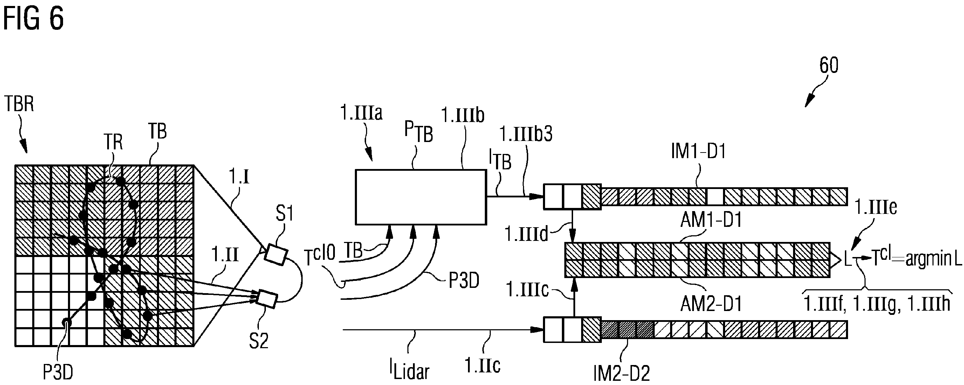

In FIG 6 ist eine symbolhafte Darstellung 60 des in FIG 1 bis FIG 5 durch Flussdiagramme veranschaulichten Verfahrens durch Bildsymbole dargestellt.

Links in FIG 6 ist ein Testbereich TBR gezeigt, von dem durch eine Kamera S1 ein Testbild TB (siehe Schritt 1.1 in FIG 1) mit den eingezeichneten unterschiedlichen Schraffuren, welche unterschiedliche Intensitätswerte darstellen sollen, aufgenommen wird. Weiterhin sind in dem Testbereich TBR Lidarpunkte P3D eingezeichnet, die entlang einer ebenfalls eingezeichneten Trajektorie TR durch eine Lidar-Sensoreinheit S2 abgetastet werden (siehe Schritt 1.II in FIG 1).

Zudem ist in der Mitte von FIG 6 oben ein rechteckiges Feld gezeichnet, das den in FIG 2 veranschaulichten Schritt 1.IIIa symbolisieren soll. Bei dem Schritt 1.IIIa erfolgt eine Projektion durch Anwendung einer initialen Projektionsmatrix T^{CL0} der bei dem Schritt 1.II erfassten Lidarpunkte P3D auf das erfasste Testbild TB. In FIG 6 ist das Ergebnis der Projektion bereits links im dargestellten Testbild TB, in dem die bei dem Schritt 1.IIIa hineinprojizierten, Lidarpunkte P3D eingezeichnet sind, gezeigt.

Ebenfalls durch das rechteckige Feld oben in der Mitte in FIG 6 ist der Schritt 1.IIIb durch einen Pfeil dargestellt. Bei dem Schritt 1.IIIb werden Bild-Intensitätswerte I_{TB} des Testbilds TB an den ermittelten Positionen P_{TB} der Lidarpunkte P3D in dem Testbild TB ermittelt.

Weiterhin sind die in FIG 3 und FIG 4 dargestellten Schritte 1.IIIb3 und 1.IIc zur Erzeugung rasterartig dargestellter eindimensionaler Intensitätsmuster IM1-D1, IM2-D1 in FIG 6 durch auf diese Muster weisenden Pfeile sowie die jeweils erzeugten eindimensionalen Intensitätsmuster IM1-D1, IM2-D1 im rechten Teil von FIG 6 dargestellt.

Die Ermittlung der jeweiligen ebenfalls rasterartig dargestellten eindimensionalen Änderungsmuster AM1-D1, AM2-D1 in den Schritten 1.IIId und 1.IIIc ist mit vertikalen Pfeilen, die jeweils von den zugehörigen eindimensionalen Intensitätsmustern IM1-D1, IM2-D1 zu den eindimensionalen Änderungsmustern AM1-D1, AM2-D1 weisen, dargestellt. Dabei sind in FIG 6 die beiden eindimensionalen Änderungsmustern AM1-D1, AM2-D1 zwischen den beiden eindimensionalen Intensitätsmustern IM1-D1, IM2-D1 liegend und aneinander anliegend dargestellt. Die unterschiedlich schraffierten Felder stellen unterschiedliche Änderungswerte der Intensität dar, deren Abweichung L voneinander bei dem Schritt 1.IIIe ermittelt wird. In FIG 6 ist veranschaulicht, wie zur Berechnung der eindimensionalen Änderungsmuster AM1-D1, AM2-D1 jeweils 3 benachbarte Felder der eindimensionalen Intensitätsmuster IM1-D1, IM2-D1 herangezogen werden.

Bei den Schritten 1.IIIf, 1.IIIg, 1.IIIh erfolgt durch Minimierung der Abweichung L, wie in FIG 6 ganz rechts symbolisiert ist, eine Ermittlung einer angepassten, vorzugsweise optimalen Projektion T^{cl}.

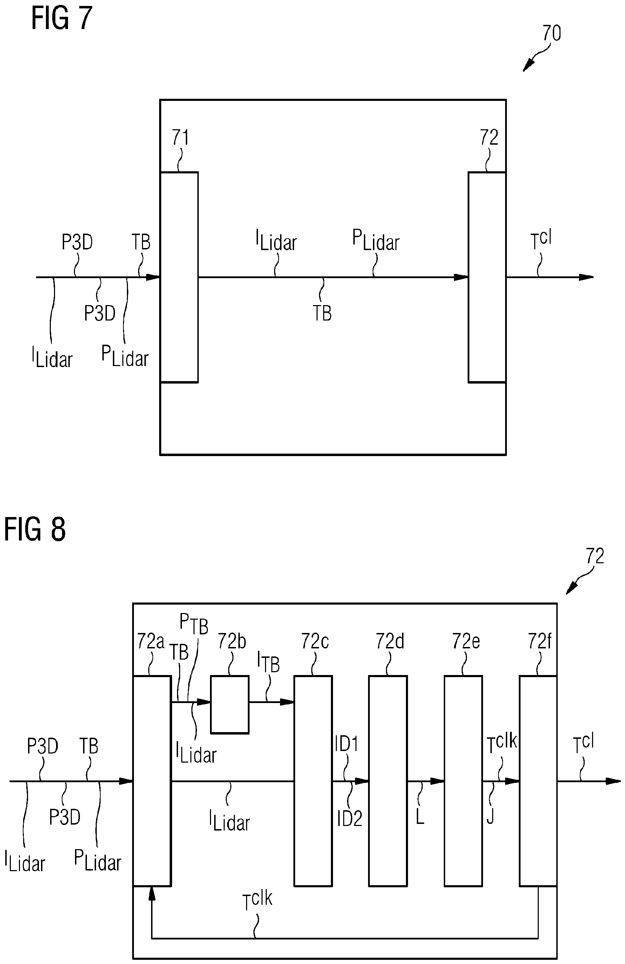

In FIG 7 ist eine schematische Darstellung einer Kalibrierungseinrichtung 70 gemäß einem Ausführungsbeispiel der Erfindung gezeigt.

Die Kalibrierungseinrichtung 70 weist eine Eingangsschnittstelle 71 auf. Die Eingangsschnittstelle 71 ist dazu eingerichtet, ein Testbild TB von einem Testbereich, welches durch eine Kamera S1 erfasst wird, und Daten betreffend dreidimensionale Lidarpunkte P3D einer Lidar-Sensoreinheit S2, welche Positionen P_{Lidar} und Punkt-Intensitätswerte I_{Lidar} umfassen, zu empfangen.

Teil der Kalibrierungseinrichtung 70 ist auch eine Kalibrierungseinheit 72 zum Durchführen einer Kalibrierung bzw. zur Erzeugung einer kalibrierten Projektion T^{cl}. Die Kalibrierung dient dazu, eine korrekte Abbildung von Lidarpunkten P3D in einem Kamerabild durchführen zu können.

In FIG 8 sind Details der in FIG 7 gezeigten Kalibrierungseinheit 72 schematisch dargestellt.

Für die Ermittlung von den Positionen P_{Lidar} der dreidimensionalen Abtastpunkte P3D jeweils zugeordneten Positionen P_{TB} in dem Testbild TB umfasst die Kalibrierungseinheit 72 eine Positionsermittlungseinheit 72a.

Teil der Kalibrierungseinheit 72 ist auch eine Intensitätsermittlungseinheit 72b zum Ermitteln von den Punkt-Intensitätswerten I_{Lidar} jeweils zugeordneten Bild-Intensitätswerten I_{TB} des Testbilds TB an den zugeordneten Positionen P_{TB}.

Außerdem umfasst die Kalibrierungseinheit 72 eine Änderungsermittlungseinheit 72c zum Ermitteln von Änderungswerten D1, D2 der ermittelten Bild-Intensitätswerte I_{TB} und der jeweils zugeordneten Punkt-Intensitätswerte I_{Lidar}.

Teil der Kalibrierungseinheit 72 ist auch eine Vergleichseinheit 72d zum Ermitteln einer Abweichung L auf Basis der Änderungswerte DI1 der Bild-Intensitätswerte I_{TB} und auf Basis der Änderungswerte DI2 der Punkt-Intensitätswerte I_{Lidar}.

Die Kalibrierungseinheit 72 umfasst auch eine Projektionsermittlungseinheit 72e zum Ermitteln einer angepassten Projektionsmatrix T^{clk}. Die angepasste Projektionsmatrix T^{clk} kann iterativ auf Basis einer mit der Abweichung L im Zusammenhang stehenden Jakobi-Matrix J ermittelt werden.

Außerdem umfasst die Kalibrierungseinheit 72 eine Qualitätskontrolleinheit 72f zum Ermitteln, ob die Qualität der Optimierung ausreichend ist. Die Qualität kann über den Restfehler (im Englischen als "loss" bezeichnet), die Konvergenz des Restfehlers oder über die gegenwärtige Beschaffenheit der Fehlerfunktion, beispielsweise basierend auf der Jakobi-Matrix J oder der Hesse-Matrix, ermittelt werden.

Wird von der Qualitätskontrolleinheit 72f ermittelt, dass die Qualität noch nicht ausreicht, so wird der nächste Iterationsschritt eingeleitet und hierzu die angepasste Projektionsmatrix T^{clk} an die Positionsermittlungseinheit 72a übermittelt.

Wird von der Qualitätskontrolleinheit 72f ermittelt, dass die Qualität der angepassten Projektionsmatrix T^{clk} ausreicht, so wird die als qualitativ ausreichend eingestufte Projektionsmatrix T^{clk} als kalibrierte Projektion T^{cl} ausgegeben.

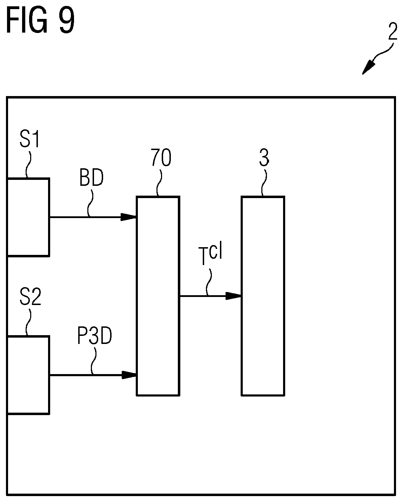

In FIG 9 ist eine schematische Darstellung eines Schienenfahrzeugs 2 gemäß einem Ausführungsbeispiel der Erfindung veranschaulicht.

Das Schienenfahrzeug 2 umfasst eine Bildkamera S1 und eine Lidar-Sensoreinheit S2. Die von der Bildkamera erfassten Bilddaten BD und von der Lidar-Sensoreinheit erfassten dreidimensionalen Abtastpunkte P3D, werden an eine Kalibrierungseinrichtung 70, die den in FIG 7 und FIG 8 gezeigten Aufbau aufweist und ebenfalls Teil des Schienenfahrzeugs 2 ist, übermittelt. Die Kalibrierungseinrichtung 70 übermittelt eine kalibrierte Projektionsmatrix T^{cl} an eine Steuereinheit 3, welche auf Basis der Kalibrierungsdaten T^{cl} die Sensordaten, d.h. insbesondere die Bilddaten BD und die dreidimensionalen Abtastpunkte P3D, auch während einer Fahrt korrekt zusammenführen kann, um Informationen über die Umgebung des Schienenfahrzeugs 2 für eine Steuerung des Schienenfahrzeugs 2 zu ermitteln.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Kalibrierung einer kombinierten Umgebungserfassung durch eine bildgebende Sensoreinheit (S1) und eine abbildende Scaneinheit (S2), aufweisend die Schritte:
- Erfassen eines Testbilds (TB), aufweisend positionsabhängige Bild-Intensitätswerte (I_{TB}), von einem Testbereich (TBR) durch die bildgebende Sensoreinheit (S1),
- Erfassen von Abtastpunkten (P3D), welche dreidimensionale Punkt-Positionen (P_{Lidar}) und Punkt-Intensitätswerte (I_{Lidar}) aufweisen, von dem Testbereich (TB) durch die abbildende Scaneinheit (S2),
- Durchführen einer Kalibrierung einer Ermittlung von projizierten Positionen (P_{TB}) von auf das Testbild (TB) projizierten Abtastpunkten (P3D) auf Basis eines Vergleichs zwischen
- einer lokalen Änderung (DI1) der Bild-Intensitätswerte (I_{TB}) an den projizierten Positionen (P_{TB}) der auf das Testbild (TB) projizierten Abtastpunkte (P3D) im Testbild (TB) und
- einer lokalen Änderung (DI2) der Punkt-Intensitätswerte (I_{Lidar}) der den jeweiligen projizierten Positionen (P_{TB}) zugeordneten Abtastpunkte (P3D).

2. Verfahren nach Anspruch 1, wobei der Vergleich eine Ermittlung einer Korrelation (K) zwischen den lokalen Änderungen (DI1) der Bild-Intensitätswerte (I_{TB}) und den lokalen Änderungen (DI2) der Punkt-Intensitätswerte (I_{Lidar}) aufweist.

3. Verfahren nach Anspruch 1 oder 2, wobei der Vergleich mindestens einen der folgenden Schritte umfasst:
- Ermitteln der projizierten Positionen (P_{TB}) durch Anwendung einer initialen Projektion (T^{cl0}) auf die dreidimensionalen Punkt-Positionen (P_{Lidar}) der Abtastpunkte (P3D),
- eindeutiges Zuordnen von Bild-Intensitätswerten (I_{TB}) und Punkt-Intensitätswerten (I_{Lidar}) zu den jeweiligen projizierten Positionen (P_{TB}),
- Festlegen einer Reihenfolge (R) der jeweiligen projizierten Positionen (P_{TB}),
- Ermitteln der lokalen Änderungen (DI1) der Bild-Intensitätswerte (I_{TB}) an den projizierten Positionen (P_{TB}) durch Vergleich von Bild-Intensitätswerten (I_{TB}) benachbarter projizierte Positionen (P_{TB}) in der Reihenfolge (R),
- Ermitteln der lokalen Änderungen (DI2) der zugeordneten Punkt-Intensitätswerte (I_{Lidar}) durch Vergleich der eindeutig zugeordneten Punkt-Intensitätswerte (I_{Lidar}),
- Ermitteln einer Abweichung (L) zwischen den ermittelten lokalen Änderungen (DI1, DI2).

4. Verfahren nach Anspruch 3, wobei bei der Ermittlung der lokalen Änderungen (DI1) der Bild-Intensitätswerte (I_{TB}) und/oder der lokalen Änderungen (DI2) der Punkt-Intensitätswerte (I_{Lidar}) ein Strukturtensor (ST) auf die in der festgelegten Reihenfolge (R) angeordneten Punkt-Intensitätswerte (I_{Lidar}) und/oder Bild-Intensitätswerte (I_{TB}) angewendet wird.

5. Verfahren nach einem der Ansprüche 3 oder 4, wobei der Schritt des Durchführens einer Kalibrierung eine Ermittlung eines Minimums der Abweichung (L) zwischen den ermittelten lokalen Änderungen (DI1) der Bild-Intensitätswerte (I_{TB}) und den ermittelten lokalen Änderungen (DI2) der Punkt-Intensitätswerte (I_{Lidar}) umfasst.

6. Verfahren nach einem der vorstehenden Ansprüche, wobei der Schritt des Durchführens einer Kalibrierung das Ermitteln einer kalibrierten Projektion (T^{cl}) zwischen den dreidimensionalen Punkt-Positionen (P_{Lidar}) der Abtastpunkte (P3D) und den projizierten Positionen (P_{TB}) in dem Testbild (TB) umfasst.

7. Verfahren nach Anspruch 6, wobei die kalibrierte Projektion (T^{cl}) derart ermittelt wird, dass bei deren Anwendung die Abweichung (L) zwischen den Werten der lokalen Änderungen (DI1) der Bild-Intensitätswerte (I_{TB}) und den Werten der lokalen Änderungen (DI2) der jeweils zugeordneten Punkt-Intensitätswerte (I_{Lidar}) minimal ist.

8. Verfahren nach einem der Ansprüche 3 bis 7, wobei eine Abweichung (L) zwischen den ermittelten lokalen Änderungen (DI1) der Bild-Intensitätswerte (I_{TB}) und den ermittelten lokalen Änderungen (DI2) der Punkt-Intensitätswerte (I_{Lidar}) ermittelt wird und die ermittelte Abweichung (L) die Summe der Quadrate der Differenzen zwischen den Werten der lokalen Änderungen (DI1) der Bild-Intensitätswerte (I_{TB}) und den Werten der lokalen Änderungen (DI2) der jeweils zugeordneten Punkt-Intensitätswerte (I_{Lidar}) umfasst.

9. Verfahren nach einem der vorstehenden Ansprüche, wobei das Durchführen der Kalibrierung ein iteratives Näherungsverfahren zur Berechnung der kalibrierten Projektion (T^{cl}) umfasst.

10. Verfahren nach einem der Ansprüche 6 bis 9, wobei eine kalibrierte Projektion (T^{cl}) ermittelt wird und die kalibrierte Projektion (T^{cl}) eine Projektionsmatrix umfasst.

11. Verfahren nach einem der vorstehenden Ansprüche, wobei die Kalibrierung auf Basis von mehreren zeitlich nacheinander erfassten Testbildern (TB), und einem mehrfachen zeitlich nacheinander durchgeführten Erfassen von Abtastpunkten (P3D) von dem Testbereich (TB) erfolgt.

12. Kalibrierungseinrichtung (70), aufweisend:
- eine Eingangsschnittstelle (71) zum
- Empfangen eines Testbilds (TB), aufweisend positionsabhängige Bild-Intensitätswerte (I_{TB}) von einem Testbereich (TB), von einer bildgebenden Sensoreinheit (S1) und
- zum Empfangen von Abtastpunkten (P3D), umfassend dreidimensionale Punkt-Positionen (P_{Lidar}) und Punkt-Intensitätswerte (I_{Lidar}), von dem Testbereich (TB) von einer abbildendenden Scaneinheit (S2),
- eine Kalibrierungseinheit (72) zum Durchführen einer Kalibrierung einer Ermittlung von projizierten Positionen (P_{TB}) von auf das Testbild (TB) projizierten Abtastpunkten (P3D) auf Basis eines Vergleichs zwischen
- einer lokalen Änderung (DI1) der Bild-Intensitätswerte (I_{TB}) an den projizierten Positionen (P_{TB}) der auf das Testbild (TB) projizierten Abtastpunkte (P3D) im Testbild (TB) und
- einer lokalen Änderung (DI2) der Punkt-Intensitätswerte (I_{Lidar}) der den jeweiligen projizierten Positionen (P_{TB}) zugeordneten Abtastpunkte (P3D).

13. Fahrzeug (2), aufweisend
- eine bildgebende Sensoreinheit (S1),
- eine abbildendende Scaneinheit (S2),
- eine Kalibrierungseinrichtung (70) nach Anspruch 12 zur Kalibrierung der bildgebenden Sensoreinheit (S1) mit der abbildendenden Scaneinheit (S2),
- eine Steuereinheit (3) zur Steuerung einer Fahrt des Schienenfahrzeugs (2) auf Basis von Sensordaten der bildgebenden Sensoreinheit (S1) und der abbildendenden Scaneinheit (S2).

14. Computerprogrammprodukt, umfassend Befehle, die bei der Ausführung des Programms durch einen Computer diesen veranlassen, die Schritte des Verfahrens nach einem der Ansprüche 1 bis 11 zur Durchführung einer Kalibrierung auszuführen.

15. Computerlesbares Speichermedium, umfassend Befehle, die bei der Ausführung durch einen Computer diesen veranlassen, die Schritte des Verfahrens nach Anspruch 1 bis 11 zur Durchführung einer Kalibrierung auszuführen.
